# EUROPEAN PATENT SPECIFICATION

(11) **EP 4 475 108 B1**
(45) Date of publication and mention of the grant of the patent: **04.11.2026**
(21) Application number: 24179970.9
(22) Date of filing: 04.06.2024
(51) Int. Cl.: G08G 5/21, G08G 5/25, G08G 5/72, G08G 5/76, G08G 5/80, G08G 5/51, G01S 17/933, G01S 13/934

(54) **AIRCRAFT GROUND ANTI-COLLISION SYSTEM AND METHOD**
FLUGZEUGBODENKOLLISIONSSCHUTZSYSTEM UND -VERFAHREN
SYSTÈME ET PROCÉDÉ ANTI-COLLISION AU SOL D'AÉRONEF

(30) Priority: 05.06.2023 CN 202310656088
(43) Date of publication of application: 11.12.2024
(73) Proprietor: Airbus (Beijing) Engineering Centre Company Limited, Beijing 101312 (CN)
(72) Inventor: HUANG, Jinming, Beijing, 101312 (CN)
(74) Representative: Abel & Imray LLP

(56) References cited:
- WO-A1-2023/284461
- US-A1- 2021 295 722
- US-A1- 2022 365 545

## Description

### FIELD

The present application relates to the field of a ground anti-collision system and method for an aircraft, and, in particular, to a ground anti-collision system and method for an aircraft in which effects of different weather conditions on the accuracy of an obstacle detecting unit are taken into account.

### BACKGROUND

The content in this section only provides background information relating to the present application, which may not constitute conventional technology.

During taxiing and parking on an airport runway and a parking apron, it is necessary for an aircraft to constantly avoid other aircrafts, buildings and other obstacles around the aircraft, in order to prevent collisions. The collisions are particularly likely to occur at a wingtip of the aircraft. Conventional ground collision avoidance solutions for an aircraft mainly rely on two types of technology including automatic dependent surveillance broadcast (ADS-B) and the sensing of surrounding objects by a sensor such as radar and/or a visual sensor. However, each of these two types of technology has some disadvantages.

ADS-B is an aircraft traffic surveillance technology where a position of the aircraft is determined by a satellite navigation system and broadcast periodically, allowing the aircraft to be tracked. An ADS-B scheme is suitable for monitoring a position of a moving aircraft and guiding a route of the aircraft to avoid collisions. However, many ground collision events for aircrafts occur before an ADS-B device is properly enabled, for example, when one aircraft is being towed forward by a trailer while another aircraft remains stationary. On the other hand, the position detection accuracy of the ADS-B scheme is low, with an error that may reach 10 m or more.

In general, the aircraft and airport ground facilities are equipped with a variety of sensors, especially radar and various types of visual sensors (e.g. cameras), in order to detect a position of an obstacle around the aircraft, and to transmit real-time surveillance video image and sensing parameters obtained by analyzing based on the video image to a pilot and ground staff. However, the signal quality of the sensors is greatly affected by the weather, in particular, the image clarity and the accuracy of the parameters of the visual sensor in low light conditions and other adverse weather conditions will be significantly reduced. The effect of the weather on performance of the sensors is not taken into account in conventional anti-collision solutions in which an object around the aircraft is detected based on the visual sensor.

The main advantage of using radar detection solutions over the visual sensor is being less expensive and relatively less affected by light and adverse weather conditions. However, a low spatial resolution is realized for the radar detection technology. In other words, the shape of an object cannot be accurately identified by a radar device. For example, the aircraft can usually be displayed as only a dot or a cross on a surveillance dashboard, and it is not possible to determine precisely the position, shape (e.g. the outline of a wingtip) of the wingtip of the aircraft by the radar. Therefore, it is not possible to accurately avoid collisions between the aircraft and other obstacles by radar detection technology alone. Furthermore, although the accuracy of radar detection is relatively less affected by light and bad weather, these effects should still not be ignored.

In summary, it is still required to develop a reliable ground collision avoidance solution for an aircraft and, in particular, a ground collision avoidance solution for an aircraft in which the safety of the aircraft can still be ensured in adverse weather conditions.

US2021295722 discloses an adaptive sense and avoid system for use with an aerial vehicle in an environment, the adaptive sense and avoid system comprising a processor, a plurality of sensors, an obstacle detection circuit, and an avoidance trajectory circuit. The processor may be operatively coupled with a flight controller and a memory device, wherein the memory device comprises one or more databases. The plurality of sensors generates sensor data reflecting a position of an obstacle in the environment. The obstacle detection circuit, which is operatively coupled to the processor and the plurality of sensors, may be configured to identify obstacles based at least in part on the sensor data and to generate obstacle information that reflects a best estimate of a position of the obstacle in the environment. The obstacle detection circuit is configured to weigh the sensor data as a function of the aerial vehicle's state and its environment.

US2022365545 discloses an apparatus for detecting and avoiding objects in real-time. The apparatus includes a first sensor that collects environmental data and a second sensor that collects external data corresponding to an external object within a detection range from the apparatus. The apparatus further includes a processor that, in real-time, calculates a minimum distance to avoid the external object, based at least in part on the environmental data and the external data, monitors the environmental data and the external data, and controls the apparatus to avoid the external object based on the calculated minimum distance and the monitored environmental data and external data.

### SUMMARY

It is an object of the present application to provide an improved aircraft ground anti-collision system and method, to improve the accuracy of monitoring ground trajectory and path planning of an aircraft and to improve the safety of ground operations of the aircraft. Another object of the present application is to mitigate the effect of weather factors on the reliability of the aircraft ground anti-collision system and method. It is a further object of the present application to improve the autonomy of the aircraft in adverse weather conditions, so that an obstacle can be reliably avoided even in single-pilot operation.

An aircraft ground anti-collision system is provided according to an aspect of the present application. The aircraft ground anti-collision system includes an obstacle detecting unit, a weather monitoring unit and a control unit. The obstacle detecting unit includes multiple sensors configured to detect position information of an obstacle around an aircraft. The weather monitoring unit is configured to receive weather information from an information source. The control unit is configured to: receive the position information from the obstacle detecting unit and the weather information from the weather monitoring unit, determine, based on the weather information, a sensor perception model suitable for the weather information, and set, based on the sensor perception model, a weight of a detection result outputted by each of the sensors in the obstacle detecting unit and output an obstacle detection result. The control unit is configured to control an operating mode and/or an operating parameter of at least one of the sensors in the obstacle detecting unit based on the sensor perception model. The control unit is configured to: in a case that the control unit determines that a weight of a detection result outputted by one or more of the sensors in the obstacle detecting unit under a condition of the sensor perception model is below a predetermined threshold, control the one or more sensors to operate in an enhanced mode.

In some embodiments, a preset plurality of sensor perception models may be stored in the control unit, and the control unit may be configured to select, based on the weather information, a sensor perception model from the preset plurality of sensor perception models by means of a look-up table.

In some embodiments, an algorithm for building or determining a sensor perception model based on the weather information may be stored in the control unit.

In some embodiments, the aircraft ground anti-collision system may further include a human-machine interface configured to input a pilot instruction to the control unit by a pilot, the control unit may be configured to determine a sensor perception model based on the pilot instruction; and the control unit may be further configured to output the obstacle detection result to the pilot via the human-machine interface.

In some embodiments, the human-machine interface may include an aircraft instrument and/or a head-up display.

In some embodiments, the aircraft ground anti-collision system may be configured to operate in a cooperative mode and/or a non-cooperative mode, where in the cooperative mode, an aircraft equipped with the aircraft ground anti-collision system and a cooperatively communicable obstacle communicate with each other, and the human-machine interface is configured to provide a global view in which a position of the cooperatively communicable obstacle is displayed; where in the non-cooperative mode, the aircraft equipped with the aircraft ground anti-collision system autonomously senses the obstacle around the aircraft, and the human-machine interface is configured to provide a local view in which the obstacle autonomously sensed is displayed.

In some embodiments, the human-machine interface may be configured to automatically display the local view in a case that an obstacle is sensed within a predetermined distance around the aircraft.

In some embodiments, the control unit is configured to: after controlling the one or more sensors to operate in the enhanced mode, redetermine the weight of the detection result outputted by the one or more sensors under the condition of the sensor perception model.

In some embodiments, the aircraft ground anti-collision system may further include a risk evaluating unit, where the risk evaluating unit is configured to perform risk evaluation based on the obstacle detection result outputted by the control unit and issue warning information to a pilot based on an evaluated risk level.

In some embodiments, the risk evaluating unit may be configured to: in a case that the risk evaluating unit determines that an automatic driving mode of the aircraft is not suitable for a current weather condition, confirm to the pilot whether to disable the automatic driving mode.

In some embodiments, the multiple sensors in the obstacle detecting unit include at least two of: millimeter wave radar, LiDAR, a conventional camera, an infrared camera, a position sensor, or an ultrasound sensor.

In some embodiments, the information source includes one or more aviation weather information broadcast of: a global forecast system, an automatic terminal information service, a meteorological terminal aviation routine weather report, a special weather report, a terminal aerodrome forecast.

An aircraft ground anti-collision method is provided according to another aspect of the present application. The aircraft ground anti-collision method includes: obtaining weather information; determining a sensor perception model based on the weather information; and setting, based on the sensor perception model, a weight of a detection result outputted by each of sensors in an obstacle detecting unit of an aircraft and outputting an obstacle detection result. The method further includes: controlling an operating mode and/or an operating parameter of at least one of the sensors in the obstacle detecting unit based on the sensor perception model. In a case that it is determined that a weight of a detection result outputted by one or more of the sensors in the obstacle detecting unit under a condition of the sensor perception model is below a predetermined threshold, the one or more sensors are be controlled to operate in an enhanced mode.

In some embodiments, the aircraft ground anti-collision method may further include: obtaining a pilot instruction, and determining a sensor perception model based on the pilot instruction.

In some embodiments, after the one or more sensors are controlled to operate in the enhanced mode, the weight of the detection result outputted by the one or more sensors under the condition of the sensor perception model is redetermined.

In some embodiments, the aircraft ground anti-collision method may further include: displaying, via a human-machine interface, a global view and/or a local view, where a position of a cooperatively communicable obstacle, obtained by the aircraft and the cooperatively communicable obstacle communicating with each other, is displayed in the global view; and an obstacle autonomously sensed by the sensors of the aircraft is displayed in the local view.

In some embodiments, the aircraft ground anti-collision method may further include: automatically displaying the local view in a case that an obstacle is sensed within a predetermined distance around the aircraft.

In some embodiments, the aircraft ground anti-collision method may further include: performing risk evaluation based on the obstacle detection result and issue warning information to a pilot based on an evaluated risk level.

In some embodiments, the aircraft ground anti-collision method may further include: in a process of the risk evaluation, in a case that it is determined that an automatic driving mode of the aircraft is not suitable for a current weather condition, confirming to the pilot whether to disable the automatic driving mode.

In some embodiments, the sensors in the obstacle detecting unit may include at least two of: millimeter wave radar, LiDAR, a conventional camera, an infrared camera, a position sensor, or an ultrasound sensor.

In some embodiments, an information source for obtaining the weather information includes one or more aviation weather information broadcast of: a global forecast system, an automatic terminal information service, a meteorological terminal aviation routine weather report, a special weather report, a terminal aerodrome forecast.

In the aircraft ground anti-collision system and method according to the present application, the effect of weather factors on the sensors (e.g. various types of radar and visual sensors) in the obstacle detecting unit of the aircraft is taken into account, the reliability of each of detection results outputted by the sensors under a current weather condition is evaluated and determined based on the effect of the weather on the sensors, and a corresponding weight is assigned to each of the detection results outputted by the sensors, thereby achieving noise reduction optimization on the output result of the obstacle detecting unit, and improving the reliability and safety of ground collision avoidance for an aircraft.

On the other hand, with the aircraft ground anti-collision system and method according to the present application, the performance of the obstacle detecting unit of the aircraft can also be optimized based on the weather condition, such that the obstacle detecting unit can automatically operate in the enhanced mode with a higher accuracy under adverse weather conditions.

Furthermore, the aircraft ground anti-collision system and method according to the present application does not rely exclusively on cooperative communication between multiple aircrafts for obstacle avoidance, which improves the reliability of the aircraft autonomously detecting an obstacle, thereby facilitating improving the autonomy of operation of the aircraft.

### BRIEF DESCRIPTION OF THE DRAWINGS

Embodiments of the present application will be described below by way of example only, with reference to the accompanying drawings. In the accompanying drawings, the same features or components are represented by the same reference numerals, and the accompanying drawings are not necessarily drawn to scale. In the accompanying drawings:
FIG. 1 illustrates a schematic view of an aircraft ground anti-collision system according to an embodiment of the present application;
FIG. 2 illustrates a schematic view of an aircraft equipped with the aircraft ground anti-collision system in FIG. 1;
FIG. 3 illustrates a flowchart of an aircraft ground anti-collision method according to an embodiment of the present application; and
FIG. 4 illustrates a refined flowchart of step S3 in FIG. 3.

### DETAILED DESCRIPTION OF THE EMBODIMENTS

The following description is by nature exemplary only and is not intended to limit the present application, application and use thereof. It should be understood that in all of these accompanying drawings, similar reference numerals indicate identical or similar parts and features. The drawings merely schematically represent the ideas and principles of embodiments of the present application and do not necessarily show the specific dimensions and the proportions of the embodiments of the present application. Specific parts in specific accompanying drawings may be exaggerated to illustrate related details or structures of various embodiments of the present application.

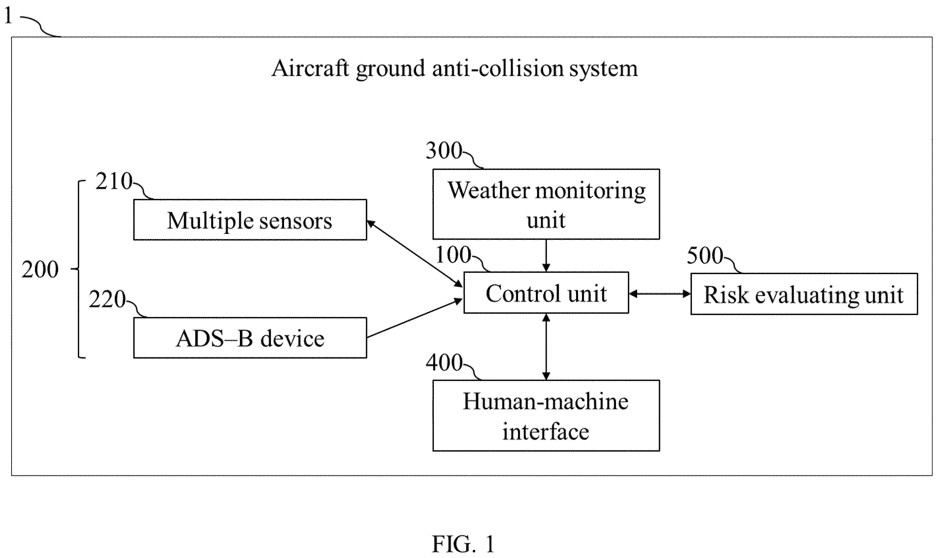

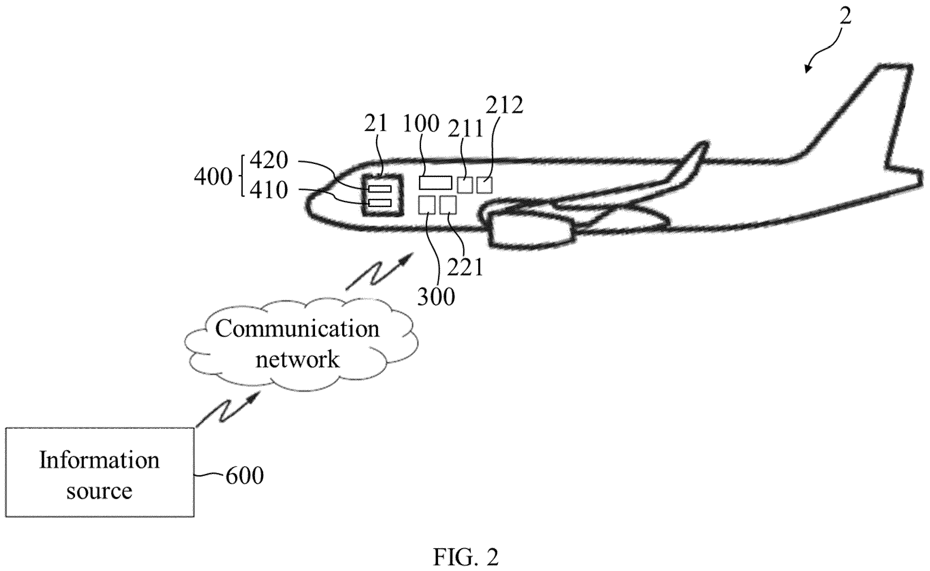

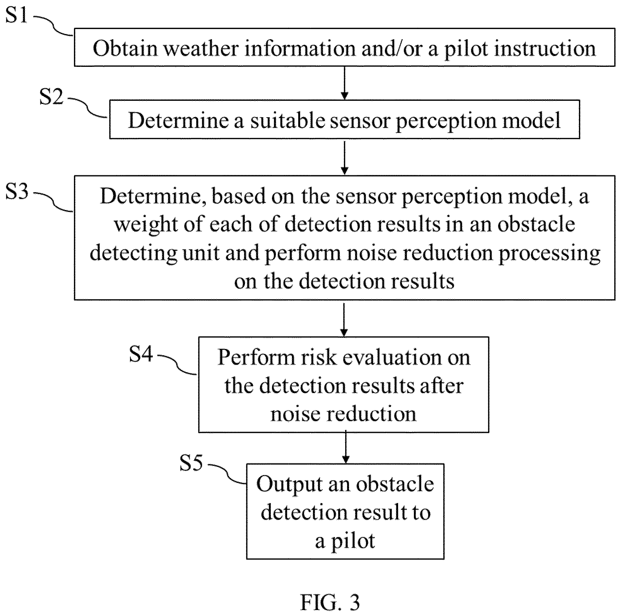

FIG. 1 illustrates a schematic view of an aircraft ground anti-collision system 1 according to an embodiment of the present application; FIG. 2 illustrates a schematic view of an aircraft 2 equipped with the aircraft ground anti-collision system 1 in FIG. 1; and FIG. 3 illustrates a flowchart of an aircraft ground anti-collision method according to an embodiment of the present application.

As shown in FIG. 1, the aircraft ground anti-collision system 1 includes a control unit 100 and an obstacle detecting unit 200. The obstacle detecting unit 200 includes multiple sensors 210 configured to detect position information of an obstacle around the aircraft. The sensors 210 may, for example, be configured to detect position information about an absolute position and/or a relative position of the aircraft with respect to the obstacle, and provide the position information to the control unit 100. The multiple sensors 210 in the obstacle detecting unit 200 may include, but are not limited to, at least two of: millimeter wave radar, LiDAR, a conventional camera, an infrared camera, a stereo camera, a position sensor, an ultrasound sensor, or the like. In addition, the obstacle detecting unit 200 may further include an automatic dependent surveillance broadcast (ADS-B) device 220. As shown in FIG. 2, at least one of the devices, for example, LiDAR 211, a camera 212, an ADS-B receiver 221, in the obstacle detecting unit 200 may be mounted on the aircraft 2. At least one of the devices in the obstacle detecting unit 200 may be mounted outside the aircraft, for example set as a ground facility or an airport on-board facility.

As shown in FIG. 1 and FIG. 2, the aircraft ground anti-collision system 1 may further include a weather monitoring unit 300. The control unit 100 is configured to receive, from the weather monitoring unit 300, information about real-time weather conditions and weather forecasts, for example, weather type, visibility, rainfall/snowfall, or light intensity. The weather monitoring unit 300 may receive the weather information from various information sources 600 via various suitable communication means such as radio communication, cellular communication networks, aeronautical mobile aircraft communication system (AeroMACS). Examples of the information sources include, but are not limited to, various aviation weather information broadcasts such as a global forecast system (GFS), an automatic terminal information service (ATIS), an meteorological terminal aviation routine weather report (METAR), a special weather report (SPECI), a terminal aerodrome forecast(TAF). The information source 600 may for example be set as a ground aviation weather service station.

As shown in FIG. 1 and FIG. 2, the aircraft ground anti-collision system 1 may further include a human-machine interface 400. The human-machine interface 400 may for example be arranged in a cockpit 21 of the aircraft 2. A pilot may input current real-time weather information or other pilot instructions to the control unit 100 via the human-machine interface 400. The weather information or instructions inputted by the pilot may be used for cross-checking, e.g. the priority of the pilot instructions may be set higher than the priority of the weather monitoring unit 300.

As shown in conjunction with FIG. 1 and FIG. 3, multiple sensor perception models suitable for multiple different weather conditions may be stored in the control unit 100 in advance, and the control unit 100 may be configured to: receive the weather information from the weather monitoring unit 300 and/or a pilot instruction from the human-machine interface 400 (step S1), and, based on the received weather information and/or pilot instruction, determine a suitable sensor perception model (step S2). For example, the control unit 100 may select the appropriate sensor perception model from pre-stored multiple sensor perception models by means of a look-up table based on the weather information such as weather type, visibility, rainfall/snowfall, or light intensity. Specifically, the current weather may be classified as sunny, rainy, snowy, hazy or the like based on the weather information, and then a refined sensor perception model appropriate for the current specific weather condition may be searched for under a corresponding weather classification based on quantitative indicators such as visibility, rainfall/snowfall, or light intensity. For example, sensor perception models appropriate for rain conditions may be subdivided into a light rain condition model, a medium rain condition model, a heavy rain condition model, a torrential rain condition model, or the like based on the rainfall. Sensor perception models appropriate for fog conditions may be subdivided into a light fog condition model, a medium fog condition model, a dense fog condition model, or the like, based on the visibility. In other embodiments, it is also possible for the control unit 100 to be configured to store an algorithm for building or determining a suitable sensor perception model based on the weather information obtained from the weather monitoring unit 300 and/or the pilot instruction obtained from the human-machine interface 400. Each sensor perception model records a confidence level of a detection result provided by each of the sensors of the obstacle detecting unit 200 in a corresponding weather condition, whereby the control unit 100 may determine a weight of a detection result provided by each of the sensors in the obstacle detecting unit 200 under the current weather condition (step S3). For example, in adverse weather conditions such as rain, snow, fog, or glare, the control unit 100 may evaluate a detection accuracy error of each of the sensors 210 in the obstacle detecting unit 200 under the current weather condition based on the corresponding sensor perception model. In a case that the detection accuracy error is large or even unacceptably severe, the control unit 100 may reduce the weight of the detection result outputted by the corresponding sensor 210 or even not to use the detection result outputted from the corresponding sensor 210 at all (i.e., the weight is reduced to zero). In other words, the control unit 100 is configured to apply noise reduction to the detection results directly outputted by the obstacle detecting unit 200 based on the determined sensor perception model, thereby reducing the weight of a detection result that is judged to be of low confidence under a condition of the current sensor perception model. As a result, the control unit 100 may output a final obstacle detection result to the pilot e.g. via the human-machine interface 400 (step S5). In addition, the control unit 100 may be configured to plan an anti-collision route for the aircraft based on the final obstacle detection result.

A large number of experimental studies have shown that the effect of different weather conditions on the detection error or confidence of various sensors can be quantified based on indicators such as visibility, rainfall/snowfall, or light intensity. It is possible, for example, to build sensor perception models suitable for various weather conditions based on the results of such experimental studies, and to determine the weight of the detection result of each of sensors in each sensor perception model, in order to exclude, or at least minimize, the adverse effects of weather on the detection result of each of the sensors. For example, in a heavy rain condition model with a rainfall of more than 25 mm/hr, the LiDAR and the various cameras have large detection errors due to being affected by the weather, while the millimeter wave radar and the ultrasound sensor are less affected by the weather and the detection errors are acceptable. Therefore, in this model, the weights of the detection results outputted by the LiDAR and various cameras may be reduced and the weights of the detection results outputted by the millimeter wave radar and the ultrasonic sensor may be increased. For another example, in a dense fog condition model with visibility less than 0.1 km, the LiDAR and conventional cameras are severely affected by the weather, which may cause false detections or detection failures, and therefore the control unit 100 may not use the detection results outputted by the LiDAR and conventional cameras at all in the model, i.e., the weights of the detection results outputted by the LiDAR and the conventional cameras may be reduced to zero.

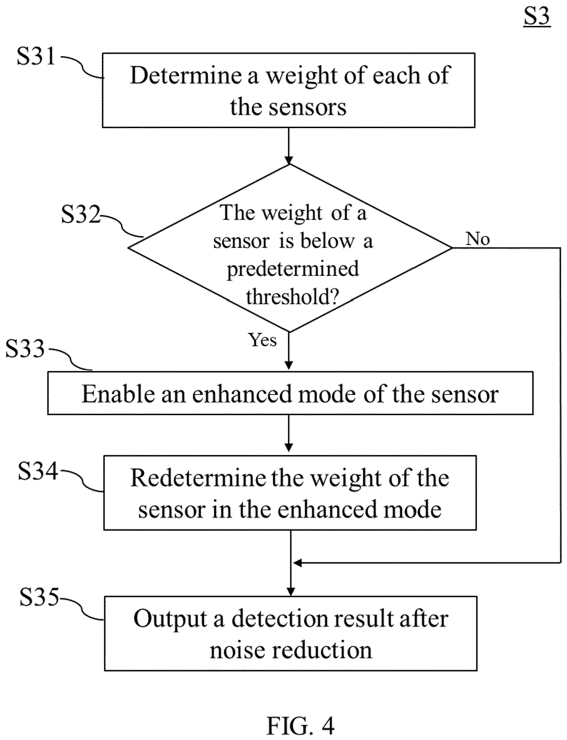

FIG. 4 illustrates a refined flowchart of step S3 in FIG. 3. As shown in FIG. 4, in step S3, the control unit 100 is further configured to control an operating mode and/or an operating parameter of at least one of the sensors 210 in the obstacle detecting unit 200 based on the weather information obtained from the weather monitoring unit 300 and/or the pilot instruction obtained from the human-machine interface 400, thereby optimizing the performance of the obstacle detecting unit 200. In particular, in a case that the control unit 100 determines that the confidence or weight of the detection results outputted by one or more of the sensors 210 in the obstacle detecting unit 200 under a condition of the currently determined sensor perception model is below a predetermined threshold (steps S31, S32), the control unit 100 controls the one or more sensors to operate in a so-called "enhanced mode" or "high accuracy mode" (step S33), thereby increasing the confidence of the detection result outputted by the sensors in adverse weather conditions. For example, in the heavy rain condition, where the control unit 100 determines that the confidence of the detection result of the LiDAR in the condition is poor, the control unit 100 may control the LiDAR to operate with an operating parameter better suited to the heavy rain condition and may also control the LiDAR to enable a multi-echo verification function and/or a gaze function where the LiDAR is focused on or locked to the detection point of interest (e.g. aircraft wingtip, airport light pole) to improve the accuracy and confidence of the detection result of the LiDAR, especially facilitating the LiDAR recognizing smaller obstacles. In the enhanced mode with the multi-echo verification function and the gaze function being enabled, the accuracy of the detection result of the LiDAR can reach pixel level.

After the control unit 100 controls the one or more sensors 210 in the obstacle detecting unit 200 to operate in the enhanced mode, the control unit 100 may redetermine the confidence and weight of the detection result outputted by each of the sensors operating in the enhanced mode in the current weather condition (step S34), and subsequently output an obstacle detection result after noise reduction based on the redetermined weight (step S35). For example, if the detection result of a sensor originally operating in a normal mode under the current weather condition is judged by the control unit 100 to be too inaccurate to be adopted, but the detection result of the sensor is redetermined by the control unit 100 to be adoptable when the enhanced mode is enabled, the control unit 100 may adopt the detection result of the sensor operating in the enhanced mode based on a corresponding weight.

Referring back to FIG. 1 and FIG. 3, preferably, the aircraft ground anti-collision system 1 may further include a risk evaluating unit 500. The risk evaluating unit 500 may be configured to perform risk evaluation on the aircraft operation based on the obstacle detection result outputted by the control unit 100 (step S4). Subsequently, the step S5 of outputting the obstacle detection result to the pilot may include issuing warning information to the pilot via the human-machine interface 400 based on a risk level evaluated by the risk evaluating unit 500. The warning information provided to the pilot may, for example, be classified into three categories: general information, usually represented in amber, alarm information, usually represented in yellow, and alert information, usually represented in red. In particular, in a case that the risk evaluating unit 500 determines that a safety risk may exist, for example in a case that at least part of the aircraft is too close to an obstacle, if the aircraft is taxiing too fast, if the automatic driving mode of the aircraft is not suitable for the current weather condition, or the like, the risk evaluating unit 500 may confirm to the pilot via the human-machine interface 400 whether to disable the automatic driving mode. Furthermore, since the control unit 100 has performed noise reduction on the detection results of the obstacle detecting unit 200 and/or optimized the performance of the obstacle detecting unit 200 based on the current weather condition, false alarms issued by the risk evaluating unit 500 can be effectively avoided.

The human-machine interface 400 may include various types of displays in the aircraft, in particular in the cockpit, such as an aircraft instrument 410 and/or a head-up display (HUD) 420 schematically illustrated in FIG. 2. The aircraft ground anti-collision system 1 may be configured to be able to provide the pilot with a global view and/or a local view in a cooperative and/or non-cooperative mode, to avoid an aircraft collision event. In the cooperative mode, the human-machine interface 400 displays a global view, in which the position information of a cooperatively communicable obstacle (e.g. other aircrafts or ground service facilities such as towers) around the aircraft may be displayed to the pilot by primarily using the ADS-B device, i.e. collision avoidance is performed through mutual communication between the aircraft and the obstacle. The global view is for example suitable for displaying the obstacle in a larger area around the aircraft (e.g. within a diameter of 2 to 3 km at the center of the aircraft). In the non-cooperative mode, the human-machine interface 400 displays the local view, in which the obstacle around the aircraft autonomously sensed primarily by the sensors on the aircraft equipped with the aircraft ground anti-collision system 1 according to the present application may be displayed to the pilot. The local view is suitable, for example, for displaying the obstacle in a smaller area around the aircraft (e.g. within a diameter of 100 to 500 m at the center of the aircraft). The human-machine interface 400 may be configured to automatically display the local view in a case that an obstacle is sensed within a predetermined distance (e.g. within 150 m) around the aircraft to improve the pilot's awareness of the scenario, which increases autonomy in the operation of the aircraft and the ability to reliably avoid the obstacle even in single-pilot operation situations, thereby improving the robustness and certainty of the system. It should be noted that the human-machine interface 400 may be configured to provide the pilot with both the global view and the local view at the same time, to facilitate the pilot fully understanding the obstacle situation around the aircraft.

The effect of different weather conditions on the detection accuracy of various radar, visual sensors and other obstacle sensors commonly used on the aircraft is objective and unavoidable. With the aircraft ground anti-collision system and method according to the present application, a suitable sensor perception model is determined based on, for example, the weather condition obtained from aerial meteorological information, and the reliability of the detection result of each of the various sensors is accordingly evaluated, and a corresponding weight is assigned to each of the detection results outputted by the sensors, thereby achieving noise reduction optimization on the output result of the obstacle detecting unit, and improving the reliability and safety of the aircraft ground anti-collision system.

Furthermore, with the aircraft ground anti-collision system and method according to the present application, the performance of the obstacle detecting unit of the aircraft can also be optimized based on the weather condition, such that the obstacle detecting unit can automatically operate in the enhanced mode with a higher accuracy under adverse weather conditions.

Furthermore, the aircraft ground anti-collision system and method according to the present application does not rely exclusively on cooperative communication between multiple aircrafts for obstacle avoidance, the pilot can be provided with the global view in the cooperative mode and/or the local view in the non-cooperative mode, which improves the reliability of autonomously detecting the obstacle by the aircraft, thereby facilitating improving the autonomy of operation of the aircraft and the pilot's awareness of the scenario.

Herein, exemplary embodiments of the aircraft ground anti-collision system and method according to the present application have been described in detail, but it should be understood that the present application is not limited to the specific embodiments described and illustrated in detail above. Various modifications and variations can be made by those skilled in the art to the present application, without departing from the spirit and scope of the present application. All the variations and modifications shall fall within the scope of the present application. Moreover, all the components described herein can be replaced by other technically equivalent components.

## Claims

1. An aircraft ground anti-collision system (1) comprising:
an obstacle detecting unit (200), comprising a plurality of sensors (210) configured to detect position information of an obstacle around an aircraft (2);
a weather monitoring unit (300), configured to receive weather information from an information source (600); and
a control unit (100), configured to: receive the position information from the obstacle detecting unit (200) and the weather information from the weather monitoring unit (300), determine, based on the weather information, a sensor perception model suitable for the weather information, and set, based on the sensor perception model, a weight of a detection result outputted by each of the sensors (210) in the obstacle detecting unit (200) and output an obstacle detection result,
**characterized in that** the control unit (100) is configured to control an operating mode and/or an operating parameter of at least one of the sensors (210) in the obstacle detecting unit (200) based on the determined sensor perception model,
wherein the control unit (100) is configured to: in a case that the control unit (100) determines that a weight of a detection result outputted by one or more of the sensors (210) in the obstacle detecting unit (200) under a condition of the determined sensor perception model is below a predetermined threshold, control the one or more sensors (210) to operate in an enhanced mode.

2. The aircraft ground anti-collision system (1) according to claim 1, wherein
a preset plurality of sensor perception models are stored in the control unit, and the control unit (100) is configured to select, based on the weather information, a sensor perception model from the preset plurality of sensor perception models by means of a look-up table; or
an algorithm for building or determining a sensor perception model based on the weather information is stored in the control unit (100).

3. The aircraft ground anti-collision system (1) according to claim 1 or 2, wherein the aircraft ground anti-collision system (1) further comprises a human-machine interface (400) configured to input a pilot instruction to the control unit (100) by a pilot, the control unit (100) is configured to determine a sensor perception model based on the pilot instruction; and the control unit (100) is further configured to output the obstacle detection result to the pilot via the human-machine interface (400).

4. The aircraft ground anti-collision system (1) according to claim 3, wherein the human-machine interface (400) comprises an aircraft instrument (410) and/or a head-up display (420).

5. The aircraft ground anti-collision system (1) according to claim 3, wherein the aircraft ground anti-collision system (1) is configured to operate in a cooperative mode and/or a non-cooperative mode, wherein in the cooperative mode, an aircraft (2) equipped with the aircraft ground anti-collision system (1) and a cooperatively communicable obstacle communicate with each other, and the human-machine interface (400) is configured to provide a global view in which a position of the cooperatively communicable obstacle is displayed; wherein in the non-cooperative mode, the aircraft (2) equipped with the aircraft ground anti-collision system (1) autonomously senses an obstacle around the aircraft, and the human-machine interface (400) is configured to provide a local view in which the obstacle autonomously sensed is displayed,
wherein the human-machine interface (400) is preferably configured to automatically display the local view in a case that an obstacle is sensed within a predetermined distance around the aircraft (2).

6. The aircraft ground anti-collision system (1) according to claim 1 or 2, wherein, the control unit (100) is configured to: after controlling the one or more sensors (210) to operate in the enhanced mode, redetermine the weight of the detection result outputted by the one or more sensors (210) under the condition of the determined sensor perception model.

7. The aircraft ground anti-collision system (1) according to claim 1 or 2, wherein the aircraft ground anti-collision system (1) further comprises a risk evaluating unit (500), wherein the risk evaluating unit (500) is configured to perform risk evaluation based on the obstacle detection result outputted by the control unit (100) and issue warning information to a pilot based on an evaluated risk level,
wherein the risk evaluating unit (500) is preferably configured to: in a case that the risk evaluating unit (500) determines that an automatic driving mode of the aircraft (2) is not suitable for a current weather condition, confirm to the pilot whether to disable the automatic driving mode.

8. The aircraft ground anti-collision system (1) according to claim 1 or 2, wherein the plurality of sensors (210) in the obstacle detecting unit (200) comprises at least two of: millimeter wave radar, LiDAR, a conventional camera, an infrared camera, a position sensor, or an ultrasound sensor, and/or
wherein the information source (600) comprises one or more aviation weather information broadcast of: a global forecast system, an automatic terminal information service, a meteorological terminal aviation routine weather report, a special weather report, a terminal aerodrome forecast.

9. An aircraft ground anti-collision method comprising:
obtaining weather information;
determining a sensor perception model based on the weather information; and
setting, based on the sensor perception model, a weight of a detection result outputted by each of sensors (210) in an obstacle detecting unit (200) of an aircraft (2) and outputting an obstacle detection result,
**characterized by** further comprising controlling an operating mode and/or an operating parameter of at least one of the sensors (210) in the obstacle detecting unit (200) based on the sensor perception model,
wherein in a case that it is determined that a weight of a detection result outputted by one or more of the sensors (210) in the obstacle detecting unit (200) under a condition of the sensor perception model is below a predetermined threshold, the one or more sensors (210) are controlled to operate in an enhanced mode.

10. The aircraft ground anti-collision method according to claim 9, further comprising: obtaining a pilot instruction, and determining a sensor perception model based on the pilot instruction.

11. The aircraft ground anti-collision method according to claim 9,wherein after the one or more sensors (210) are controlled to operate in the enhanced mode, the weight of the detection result outputted by the one or more sensors (210) under the condition of the sensor perception model is redetermined.

12. The aircraft ground anti-collision method according to claim 9, further comprising:
displaying, via a human-machine interface (400), a global view and/or a local view, wherein a position of a cooperatively communicable obstacle, obtained by the aircraft (2) and the cooperatively communicable obstacle communicating with each other, is displayed in the global view; and an obstacle autonomously sensed by the sensors (210) of the aircraft (2) is displayed in the local view; and preferably automatically displaying the local view in a case that an obstacle is sensed within a predetermined distance around the aircraft (2).

13. The aircraft ground anti-collision method according to claim 9, further comprising: performing risk evaluation based on the obstacle detection result and issue warning information to a pilot based on an evaluated risk level, and preferably, in a process of the risk evaluation, in a case that it is determined that an automatic driving mode of the aircraft (2) is not suitable for a current weather condition, confirming to the pilot whether to disable the automatic driving mode.

14. The aircraft ground anti-collision method according to any one of claims 9 to 13, wherein the sensors (210) in the obstacle detecting unit (200) comprise at least two of: millimeter wave radar, LiDAR, a conventional camera, an infrared camera, a position sensor, or an ultrasound sensor.

15. The aircraft ground anti-collision method according to any one of claims 9 to 13, wherein an information source (600) for obtaining the weather information comprises one or more aviation weather information broadcast of: a global forecast system, an automatic terminal information service, a meteorological terminal aviation routine weather report, a special weather report, a terminal aerodrome forecast.

## Patentansprüche

1. Flugzeugbodenkollisionsschutzsystem (1), umfassend:
eine Hinderniserfassungseinheit (200), umfassend eine Mehrzahl von Sensoren (210), die dazu ausgelegt sind, Positionsinformationen eines Hindernisses in der Umgebung eines Flugzeugs (2) zu erfassen;
eine Wetterüberwachungseinheit (300), die dazu ausgelegt ist, Wetterinformationen von einer Informationsquelle (600) zu empfangen; und
eine Steuereinheit (100), die dazu ausgelegt ist, die Positionsinformationen von der Hinderniserfassungseinheit (200) und die Wetterinformationen von der Wetterüberwachungseinheit (300) zu empfangen, basierend auf den Wetterinformationen ein für die Wetterinformationen geeignetes Sensorwahrnehmungsmodell zu bestimmen und basierend auf dem Sensorwahrnehmungsmodell eine Gewichtung eines von jedem der Sensoren (210) in der Hinderniserfassungseinheit (200) ausgegebenen Erfassungsergebnisses festzulegen und ein Hinderniserfassungsergebnis auszugeben,
**dadurch gekennzeichnet, dass** die Steuereinheit (100) dazu ausgelegt ist, einen Betriebsmodus und/oder einen Betriebsparameter mindestens eines der Sensoren (210) in der Hinderniserfassungseinheit (200) basierend auf dem bestimmten Sensorwahrnehmungsmodell zu steuern,
wobei die Steuereinheit (100) dazu ausgelegt ist, wenn die Steuereinheit (100) bestimmt, dass die Gewichtung eines von einem oder mehreren der Sensoren (210) in der Hinderniserfassungseinheit (200) unter den Bedingungen des bestimmten Sensorwahrnehmungsmodells ausgegebenen Erfassungsergebnisses unter einem vorbestimmten Schwellenwert liegt, einen oder mehrere der Sensoren (210) so zu steuern, dass sie in einem erweiterten Modus betrieben werden.

2. Flugzeugbodenkollisionsschutzsystem (1) nach Anspruch 1, wobei
eine vorgegebene Mehrzahl von Sensorwahrnehmungsmodellen in der Steuereinheit gespeichert ist und die Steuereinheit (100) dazu ausgelegt ist, basierend auf den Wetterinformationen ein Sensorwahrnehmungsmodell aus der vorgegebenen Mehrzahl von Sensorwahrnehmungsmodellen mittels einer Nachschlagetabelle auszuwählen; oder
ein Algorithmus zum Erstellen oder Bestimmen eines Sensorwahrnehmungsmodells basierend auf den Wetterinformationen in der Steuereinheit (100) gespeichert ist.

3. Flugzeugbodenkollisionsschutzsystem (1) nach Anspruch 1 oder 2, wobei das Flugzeugbodenkollisionsschutzsystem (1) ferner eine Mensch-Maschine-Schnittstelle (400) umfasst, die dazu ausgelegt ist, eine von einem Piloten erteilte Pilotenanweisung in die Steuereinheit (100) einzugeben, die Steuereinheit (100) dazu ausgelegt ist, basierend auf der Pilotenanweisung ein Sensorwahrnehmungsmodell zu bestimmen; und die Steuereinheit (100) ferner dazu ausgelegt ist, das Hinderniserfassungsergebnis über die Mensch-Maschine-Schnittstelle (400) an den Piloten auszugeben.

4. Flugzeugbodenkollisionsschutzsystem (1) nach Anspruch 3, wobei die Mensch-Maschine-Schnittstelle (400) ein Flugzeuginstrument (410) und/oder ein Head-up-Display (420) umfasst.

5. Flugzeugbodenkollisionsschutzsystem (1) nach Anspruch 3, wobei das Flugzeugbodenkollisionsschutzsystem (1) dazu ausgelegt ist, in einem kooperativen Modus und/oder einem nichtkooperativen Modus zu arbeiten, wobei in dem kooperativen Modus ein mit dem Flugzeugbodenkollisionsschutzsystem (1) ausgestattetes Flugzeug (2) und ein kooperativ kommunikationsfähiges Hindernis miteinander kommunizieren und die Mensch-Maschine-Schnittstelle (400) dazu ausgelegt ist, eine globale Ansicht bereitzustellen, in der eine Position des kooperativ kommunikationsfähigen Hindernisses angezeigt wird; wobei in dem nichtkooperativen Modus das mit dem Flugzeugbodenkollisionsschutzsystem (1) ausgestattete Flugzeug (2) ein Hindernis in der Umgebung des Flugzeugs autonom erfasst und die Mensch-Maschine-Schnittstelle (400) dazu ausgelegt ist, eine lokale Ansicht bereitzustellen, in der das autonom erfasste Hindernis angezeigt wird,
wobei die Mensch-Maschine-Schnittstelle (400) vorzugsweise dazu ausgelegt ist, die lokale Ansicht automatisch anzuzeigen, wenn ein Hindernis innerhalb eines vorbestimmten Abstands zum Flugzeug (2) erfasst wird.

6. Flugzeugbodenkollisionsschutzsystem (1) nach Anspruch 1 oder 2, wobei die Steuereinheit (100) dazu ausgelegt ist, nachdem sie einen oder mehrere der Sensoren (210) so gesteuert hat, dass sie in dem erweiterten Modus betrieben werden, die Gewichtung des von diesen Sensoren (210) unter den Bedingungen des bestimmten Sensorwahrnehmungsmodells ausgegebenen Erfassungsergebnisses neu zu bestimmen.

7. Flugzeugbodenkollisionsschutzsystem (1) nach Anspruch 1 oder 2, wobei das Flugzeugbodenkollisionsschutzsystem (1) ferner eine Risikobewertungseinheit (500) umfasst, wobei die Risikobewertungseinheit (500) dazu ausgelegt ist, basierend auf dem von der Steuereinheit (100) ausgegebenen Hinderniserfassungsergebnis eine Risikobewertung durchzuführen und basierend auf einem bewerteten Risikoniveau Warninformationen an einen Piloten auszugeben,
wobei die Risikobewertungseinheit (500) vorzugsweise dazu ausgelegt ist, wenn die Risikobewertungseinheit (500) bestimmt, dass ein automatischer Fahrmodus des Flugzeugs (2) für eine aktuelle Wetterbedingung nicht geeignet ist, eine Bestätigung des Piloten einzuholen, ob der automatische Fahrmodus deaktiviert werden soll.

8. Flugzeugbodenkollisionsschutzsystem (1) nach Anspruch 1 oder 2, wobei die Mehrzahl von Sensoren (210) in der Hinderniserfassungseinheit (200) mindestens zwei der folgenden Sensortypen umfasst:
Millimeterwellenradar, LiDAR, eine herkömmliche Kamera, eine Infrarotkamera, einen Positionssensor oder einen Ultraschallsensor, und/oder
wobei die Informationsquelle (600) eine oder mehrere der folgenden Flugwetterinformationssendungen umfasst: ein globales Vorhersagesystem, einen automatischen Terminalinformationsdienst, einen meteorologischen routinemäßigen Flugwetterbericht für einen Terminal, einen Sonderwetterbericht oder eine Terminalflugplatzvorhersage.

9. Flugzeugbodenkollisionsschutzverfahren, umfassend:
Erhalten von Wetterinformationen;
Bestimmen eines Sensorwahrnehmungsmodells basierend auf den Wetterinformationen; und
Festlegen, basierend auf dem Sensorwahrnehmungsmodell, einer Gewichtung eines von jedem der Sensoren (210) in einer Hinderniserfassungseinheit (200) eines Flugzeugs (2) ausgegebenen Erfassungsergebnisses und Ausgeben eines Hinderniserfassungsergebnisses,
**dadurch gekennzeichnet, dass** ferner ein Betriebsmodus und/oder ein Betriebsparameter mindestens eines der Sensoren (210) in der Hinderniserfassungseinheit (200) basierend auf dem Sensorwahrnehmungsmodell gesteuert wird,
wobei, wenn bestimmt wird, dass die Gewichtung eines von einem oder mehreren der Sensoren (210) in der Hinderniserfassungseinheit (200) unter den Bedingungen des Sensorwahrnehmungsmodells ausgegebenen Erfassungsergebnisses unter einem vorbestimmten Schwellenwert liegt, einer oder mehrere der Sensoren (210) so gesteuert werden, dass sie in einem erweiterten Modus betrieben werden.

10. Flugzeugbodenkollisionsschutzverfahren nach Anspruch 9, ferner umfassend: Erhalten einer Pilotenanweisung und Bestimmen eines Sensorwahrnehmungsmodells basierend auf der Pilotenanweisung.

11. Flugzeugbodenkollisionsschutzverfahren nach Anspruch 9, wobei, nachdem einer oder mehrere der Sensoren (210) so gesteuert wurden, dass sie in dem erweiterten Modus betrieben werden, die Gewichtung des von diesen Sensoren (210) unter den Bedingungen des Sensorwahrnehmungsmodells ausgegebenen Erfassungsergebnisses neu bestimmt wird.

12. Flugzeugbodenkollisionsschutzverfahren nach Anspruch 9, ferner umfassend:
Anzeigen einer globalen Ansicht und/oder einer lokalen Ansicht über eine Mensch-Maschine-Schnittstelle (400), wobei in der globalen Ansicht eine Position eines kooperativ kommunikationsfähigen Hindernisses angezeigt wird, die dadurch erhalten wird, dass das Flugzeug (2) und das kooperativ kommunikationsfähige Hindernis miteinander kommunizieren; und wobei in der lokalen Ansicht ein von den Sensoren (210) des Flugzeugs (2) autonom erfasstes Hindernis angezeigt wird; und
vorzugsweise automatisches Anzeigen der lokalen Ansicht, wenn ein Hindernis innerhalb eines vorbestimmten Abstands zum Flugzeug (2) erfasst wird.

13. Flugzeugbodenkollisionsschutzverfahren nach Anspruch 9, ferner umfassend: Durchführen einer Risikobewertung basierend auf dem Hinderniserfassungsergebnis und Ausgeben von Warninformationen an einen Piloten basierend auf einem bewerteten Risikoniveau sowie vorzugsweise, wenn im Verlauf der Risikobewertung bestimmt wird, dass ein automatischer Fahrmodus des Flugzeugs (2) für eine aktuelle Wetterbedingung nicht geeignet ist, Einholen einer Bestätigung des Piloten, ob der automatische Fahrmodus deaktiviert werden soll.

14. Flugzeugbodenkollisionsschutzverfahren nach einem der Ansprüche 9 bis 13, wobei die Sensoren (210) in der Hinderniserfassungseinheit (200) mindestens zwei der folgenden Sensortypen umfassen: Millimeterwellenradar, LiDAR, eine herkömmliche Kamera, eine Infrarotkamera, einen Positionssensor oder einen Ultraschallsensor.

15. Flugzeugbodenkollisionsschutzverfahren nach einem der Ansprüche 9 bis 13, wobei eine Informationsquelle (600) zum Erhalten der Wetterinformationen eine oder mehrere der folgenden Flugwetterinformationssendungen umfasst: ein globales Vorhersagesystem, einen automatischen Terminalinformationsdienst, einen meteorologischen routinemäßigen Flugwetterbericht für einen Terminal, einen Sonderwetterbericht oder eine Terminalflugplatzvorhersage.

## Revendications

1. Système anticollision au sol d'aéronef (1) comprenant :
une unité de détection d'obstacle (200) comprenant une pluralité de capteurs (210) configurés pour détecter des informations de position d'un obstacle autour d'un aéronef (2) ;
une unité de surveillance météorologique (300), configurée pour recevoir des informations météorologiques d'une source d'informations (600) ; et
une unité de commande (100), configurée pour : recevoir les informations de position provenant de l'unité de détection d'obstacle (200) et les informations météorologiques provenant de l'unité de surveillance météorologique (300), déterminer, sur la base des informations météorologiques, un modèle de perception de capteur adapté pour les informations météorologiques, et définir, sur la base du modèle de perception de capteur, le poids d'un résultat de détection émis par chacun des capteurs (210) dans l'unité de détection d'obstacle (200) et délivrer en sortie un résultat de détection d'obstacle,
**caractérisé en ce que** l'unité de commande (100) est configurée pour commander un mode de fonctionnement et/ou un paramètre de fonctionnement d'au moins un des capteurs (210) dans l'unité de détection d'obstacle (200) sur la base du modèle de perception de capteur déterminé,
où l'unité de commande (100) est configurée pour : dans le cas où l'unité de commande (100) détermine que le poids d'un résultat de détection délivré en sortie par un ou plusieurs des capteurs (210) dans l'unité de détection d'obstacle (200) compte tenu du modèle de perception de capteur déterminé est inférieur à un seuil prédéterminé, commander les un ou plusieurs capteurs (210) pour fonctionner dans un mode amélioré.

2. Système anticollision au sol d'aéronef (1) selon la revendication 1, dans lequel
une pluralité prédéfinie de modèles de perception de capteur sont stockés dans l'unité de commande, et l'unité de commande (100) est configurée pour sélectionner, sur la base des informations météorologiques, un modèle de perception de capteur parmi la pluralité prédéfinie de modèles de perception de capteur au moyen d'une table de consultation ; ou
un algorithme permettant de construire ou de déterminer un modèle de perception de capteur basé sur les informations météorologiques est stocké dans l'unité de commande (100).

3. Système anticollision au sol d'aéronef (1) selon la revendication 1 ou 2, dans lequel le système anticollision au sol d'aéronef (1) comprend en outre une interface homme-machine (400) configurée pour entrer une instruction de pilote dans l'unité de commande (100) par un pilote, l'unité de commande (100) étant configurée pour déterminer un modèle de perception de capteur sur la base de l'instruction de pilote ; et l'unité de commande (100) étant en outre configurée pour délivrer en sortie le résultat de détection d'obstacle au pilote par l'intermédiaire de l'interface homme-machine (400).

4. Système anticollision au sol d'aéronef (1) selon la revendication 3, dans lequel l'interface homme-machine (400) comprend un instrument d'aéronef (410) et/ou un affichage tête haute (420).

5. Système anticollision au sol d'aéronef (1) selon la revendication 3, dans lequel le système anticollision au sol d'aéronef (1) est configuré pour fonctionner dans un mode coopératif et/ou un mode non coopératif où, dans le mode coopératif, un aéronef (2) équipé du système anticollision au sol d'aéronef (1) et un obstacle pouvant communiquer de manière coopérative communiquent entre eux, et l'interface homme-machine (400) est configurée pour fournir une vue globale dans laquelle une position de l'obstacle pouvant communiquer de manière coopérative est affichée ; où, dans le mode non coopératif, l'aéronef (2) équipé du système anticollision au sol d'aéronef (1) détecte de manière autonome un obstacle autour de l'aéronef, et l'interface homme-machine (400) est configurée pour fournir une vue locale dans laquelle l'obstacle capté de manière autonome est affiché,
où l'interface homme-machine (400) est configurée de préférence pour afficher automatiquement la vue locale dans le cas où un obstacle est détecté à une distance prédéterminée autour de l'aéronef (2).

6. Système anticollision au sol d'aéronef (1) selon la revendication 1 ou 2, dans lequel l'unité de commande (100) est configurée pour : après avoir commandé les un ou plusieurs capteurs (210) pour fonctionner dans le mode amélioré, redéterminer le poids du résultat de détection délivré en sortie par les un ou plusieurs capteurs (210) compte tenu du modèle de perception de capteur déterminé.

7. Système anticollision au sol d'aéronef (1) selon la revendication 1 ou 2, dans lequel le système anticollision au sol d'aéronef (1) comprend en outre une unité d'évaluation de risque (500), l'unité d'évaluation de risque (500) étant configurée pour effectuer une évaluation de risque sur la base du résultat de détection d'obstacle fourni par l'unité de commande (100) et délivrer des informations d'avertissement à un pilote sur la base d'un niveau de risque évalué,
où l'unité d'évaluation de risque (500) est de préférence configurée pour : dans un cas où l'unité d'évaluation de risque (500) détermine qu'un mode de conduite automatique de l'aéronef (2) n'est pas adapté à une condition météorologique courante, confirmer au pilote de désactiver ou non le mode de conduite automatique.

8. Système anticollision au sol d'aéronef (1) selon la revendication 1 ou 2, dans lequel la pluralité de capteurs (210) dans l'unité de détection d'obstacle (200) comprend au moins deux parmi : un radar à ondes millimétriques, un LiDAR, une caméra conventionnelle, une caméra infrarouge, un capteur de position, ou un capteur à ultrasons, et/ou
où la source d'informations (600) comprend une ou plusieurs informations météorologiques aéronautiques diffusées par : un système mondial de prévision, un service automatique d'information de région terminale, un message d'observation météorologique aéronautique régulière d'aérodrome, un message météorologique spécial, une prévision météorologique d'aérodrome.

9. Procédé anticollision au sol d'aéronef comprenant les étapes suivantes :
obtenir des informations météorologiques ;
déterminer un modèle de perception de capteur sur la base des informations météorologiques ; et
établir, sur la base du modèle de perception de capteur, le poids d'un résultat de détection délivré en sortie par chacun des capteurs (210) dans une unité de détection d'obstacle (200) d'un aéronef (2) et délivrer en sortie un résultat de détection d'obstacle,
**caractérisé en ce qu'**il comprend en outre de commander un mode de fonctionnement et/ou un paramètre de fonctionnement d'au moins un des capteurs (210) dans l'unité de détection d'obstacle (200) sur la base du modèle de perception de capteur,
où, dans le cas où il est déterminé que le poids d'un résultat de détection délivré par un ou plusieurs des capteurs (210) dans l'unité de détection d'obstacle (200) compte tenu du modèle de perception de capteur est inférieur à un seuil prédéterminé, les un ou plusieurs capteurs (210) sont commandés pour fonctionner dans un mode amélioré.

10. Procédé anticollision au sol d'aéronef selon la revendication 9, comprenant en outre : l'obtention d'une instruction de pilote, et la détermination d'un modèle de perception de capteur basé sur l'instruction de pilote.

11. Procédé anticollision au sol d'aéronef selon la revendication 9, dans lequel, après que les un ou plusieurs capteurs (210) ont été commandés pour fonctionner dans le mode amélioré, le poids du résultat de détection délivré par les un ou plusieurs capteurs (210) compte tenu du modèle de perception de capteur est redéterminé.

12. Procédé anticollision au sol d'aéronef selon la revendication 9, comprenant en outre les étapes suivantes :
afficher, par l'intermédiaire d'une interface homme-machine (400), une vue globale et/ou une vue locale, où la position d'un obstacle communiquant de façon coopérative, obtenue par l'aéronef (2) et l'obstacle communiquant de façon coopérative, est affichée dans la vue globale ; et un obstacle détecté de façon autonome par les capteurs (210) de l'aéronef (2) est affichée dans la vue locale ; et, de préférence, afficher automatiquement la vue locale dans le cas où un obstacle est détecté à une distance prédéterminée autour de l'aéronef (2).

13. Procédé anticollision au sol d'aéronef selon la revendication 9, comprenant en outre les étapes suivantes : réaliser une évaluation des risques sur la base du résultat de détection d'obstacle et délivrer des informations d'avertissement à un pilote sur la base d'un niveau de risque évalué et, de préférence, dans un processus d'évaluation de risque, dans le cas où il est déterminé qu'un mode de conduite automatique de l'aéronef (2) n'est pas adapté aux conditions météorologiques courantes, confirmer au pilote de désactiver ou non le mode de conduite automatique.

14. Procédé anticollision au sol d'aéronef selon l'une quelconque des revendications 9 à 13, dans lequel les capteurs (210), dans l'unité de détection d'obstacle (200), comprennent au moins deux capteurs parmi : un radar à ondes millimétriques, un LiDAR, une caméra conventionnelle, une caméra infrarouge, un capteur de position ou un capteur à ultrasons.

15. Procédé anticollision au sol d'aéronef selon l'une quelconque des revendications 9 à 13, dans lequel une source d'informations (600) servant à obtenir les informations météorologiques comprend une ou plusieurs diffusions d'informations météorologiques aéronautiques parmi : un système mondial de prévision, un service automatique d'information de région terminale, un message d'observation météorologique aéronautique régulière d'aérodrome, un message météorologique spécial, une prévision d'aérodrome.
